# FASCICULE DE BREVET EUROPEEN

(11) **EP 2 401 852 B1**
(45) Date de publication et mention de la délivrance du brevet: **11.06.2014**
(21) Numéro de dépôt: 10710079.4
(22) Date de dépôt: 24.02.2010
(51) Int. Cl.: H04W 8/24, H04L 29/08

(54) **CONFIGURATION AUTOMATIQUE D'UN TERMINAL**
AUTOMATISCHE KONFIGURATION FÜR EIN ENDGERÄT
AUTOMATIC CONFIGURATION FOR A TERMINAL

(30) Priorité: 27.02.2009 FR 0951250
(43) Date de publication de la demande: 04.01.2012
(73) Titulaire: Orange, 75015 Paris (FR)
(72) Inventeur: RAFFARD, Rémi, F-75010 Paris (FR); FOURREAU, Laurent, F-14210 Evrecy (FR)
(86) Numéro de dépôt international: PCT/FR2010/050313
(87) Numéro de publication internationale: WO 2010/097544

(56) Documents cités:
- WO-A-2008/028989
- US-A1- 2004 166 839
- GSMA: "mobile NFC technical guidelines - Version 2.0" INTERNET CITATION, [Online] pages 1-95, XP002495767 Extrait de l'Internet: URL:http://www.gsmworld.com/documents/nfc/ gsma_nfc2_wp.pdf> [extrait le 2008-09-09]

## Description

La présente invention se rapporte au domaine des télécommunications, et plus particulièrement à celui des cartes à puce d'abonné destinées à être insérées dans des terminaux de communications mobiles et des terminaux associés.

La plupart des terminaux mobiles existants permettent, non seulement d'établir des communications téléphoniques, mais également d'exécuter un certain nombre d'applications qui sont par exemple des applications de paiement, de fidélité ou encore de transport.

Dans ces systèmes, les applications sont enregistrées dans la carte à puce d'abonné pour des raisons de sécurité. Une application d'interface, associée à chaque application et enregistrée sur le terminal mobile, permet de gérer l'interface avec l'utilisateur.

Ces applications peuvent être des applications dites "classiques". Dans ce cas, elles sont exécutées suite à la réception par la carte à puce d'abonné d'une commande émise par l'application d'interface, à la demande de l'utilisateur du terminal.

Ces applications peuvent également être des applications dites "sans contact". Ces applications peuvent alors fonctionner lorsque la carte d'abonné est insérée dans un terminal mobile équipé d'un module de communication sans contact. Dans ce cas, elles sont exécutées suite à la réception par la carte d'abonné d'une commande émise par une borne distante, via le module de communication sans contact du terminal. Le programme d'interface permet notamment de notifier l'utilisateur suite à l'exécution de l'application associée.

Le fonctionnement de ces applications nécessite donc une configuration du terminal compatible avec les applications installées dans la carte d'abonné.

D'autres systèmes sont connus de l'art antérieur tels que décrits dans les documents WO 2008/028989 et US 2004/166839.

La configuration des terminaux varie selon l'opérateur et/ou le constructeur.

Aussi, lorsqu'on introduit une carte d'abonné dans un terminal, celui-ci peut ne pas être configuré de façon à faire fonctionner les applications installées dans la carte d'abonné. Ainsi, les applications peuvent ne pas fonctionner ou au contraire fonctionner à l'insu de l'utilisateur. Par exemple, si les applications d'interface du terminal associées aux applications stockées dans la carte d'abonné ne sont pas installées dans le terminal mobile, l'utilisateur n'a aucun retour sur les opérations effectuées par les applications de la carte d'abonné.

Pour obtenir une configuration adaptée, l'utilisateur doit contacter l'opérateur associé à la carte d'abonné.

Le changement de terminal mobile est une opération de plus en plus courante. Le fait de devoir contacter l'opérateur à chaque changement peut devenir fastidieux pour l'utilisateur.

Il existe donc un besoin de configurer de manière automatique un terminal mobile lors de l'introduction d'une carte à puce d'abonné.

A cet effet, la présente invention propose un procédé de demande de configuration d'un terminal connecté à une carte d'abonné, ladite carte contenant au moins une application, caractérisé en ce que, suite à une étape d'échanges d'information d'initialisation, via une première interface de communication, entre ledit terminal et ladite carte d'abonné, il comporte :
- une étape d'envoi, via une deuxième interface de communication, d'une requête d'une information de configuration du terminal;
- une étape de réception, via la deuxième interface de communication, d'une réponse à la requête comportant une information de configuration dudit terminal;
- pour au moins une application de la carte d'abonné, une étape de détermination, en fonction de l'information de configuration reçue, de la présence ou de l'absence dans le terminal d'une application d'interface associée à ladite au moins une application;
- une étape d'envoi, via la première interface de télécommunication, d'au moins une commande de téléchargement de ladite application d'interface en cas d'absence.

Ainsi, la carte à puce d'abonné détecte si le terminal dans lequel elle est insérée est correctement configuré et, si le terminal n'est pas correctement configuré, elle demande à un serveur distant, via le terminal, le téléchargement d'un ou plusieurs programmes permettant une configuration adaptée.

La carte d'abonné est un élément sécurisé. La configuration automatique du terminal, à l'initiative de la carte d'abonné, permet à la carte d'abonné de retrouver un environnement de fonctionnement en adéquation avec son contenu, quelque soit le terminal dans lequel elle est insérée. Elle permet de garantir le bon fonctionnement des applications installées sur la carte d'abonné.

Selon un mode de réalisation particulier du procédé de demande de configuration, l'application d'interface est apte à gérer l'ensemble des applications d'interface présentes dans le terminal. Ainsi, le téléchargement d'une application d'interface permet ensuite au terminal de configurer toutes les autres applications du terminal.

Selon une caractéristique particulière du procédé de demande de configuration, la requête comporte une adresse d'un registre d'un module de communication sans contact du terminal et la réponse contient au moins une partie du contenu dudit registre. La présence d'une adresse dans la requête permet un accès rapide à l'information.

Selon une caractéristique particulière, le registre contient une information de présence ou d'absence d'au moins une application d'interface. Un seul registre permet ainsi d'obtenir une information sur la présence ou l'absence d'une ou plusieurs applications d'interface installées dans le terminal.

L'invention se rapporte également à un procédé de configuration d'un terminal connecté à une carte d'abonné, ladite carte contenant au moins une application, caractérisé en ce que, suite à une étape d'échanges d'information d'initialisation, via une première interface de communication, entre ledit terminal et ladite carte d'abonné, il comporte :
- une étape de réception, via une deuxième interface de communication, d'une requête d'une information de configuration du terminal;
- une étape d'envoi, via la deuxième interface de communication, d'une réponse à la requête comportant une information de configuration dudit terminal;
et, si au moins une application d'interface associée à une application de la carte d'abonné n'est pas présente dans ledit terminal :
- une étape de réception, via la première interface de télécommunication, d'au moins une commande de téléchargement d'une application d'interface associée à une application de la carte d'abonné;
- une étape de transmission de ladite au moins une commande à un serveur distant; et
- une étape de mise à jour de l'information de configuration, suite au téléchargement de l'application d'interface commandée.

Ainsi, le terminal est mis à jour dès le démarrage ou l'introduction d'une nouvelle carte d'abonné. Cette mise à jour permet un fonctionnement adapté aux applications installées dans la carte d'abonné. L'utilisateur peut donc introduire sa carte d'abonné dans tout nouveau terminal et obtenir la mise à jour du terminal sans manipulation de sa part et sans avoir à se déplacer chez son opérateur.

Selon une caractéristique du procédé de configuration, l'information de configuration est contenue dans un registre d'un module de communication sans contact du terminal mobile.

Selon une autre caractéristique particulière du procédé de configuration, la requête comporte une adresse d'un registre d'un module de communication sans contact du terminal et la réponse contient au moins une partie du contenu dudit registre.

Selon un mode de réalisation particulier du procédé de configuration, l'application d'interface est apte à gérer l'ensemble des applications d'interface présentes dans le terminal. Ainsi, le téléchargement dans le terminal d'une seule application d'interface permet ensuite au terminal de déterminer les applications d'interface manquantes.

Selon une caractéristique particulière du procédé de configuration, l'étape de mise à jour de l'information de configuration comprend l'envoi d'une commande à un module de communication sans contact du terminal, via une troisième interface de communication. L'accès unique à l'information de configuration par le module de communication sans contact permet une meilleure sécurité ainsi qu'une plus grande compatibilité entre terminaux.

Selon une caractéristique particulière du procédé de configuration, l'étape de mise à jour de l'information de configuration est réitérée lors d'un téléchargement par le terminal d'une nouvelle application d'interface. Ainsi, lors du démarrage suivant ou d'un changement de carte d'abonné, il ne sera pas nécessaire de procéder au téléchargement de cette application. L'information de configuration permet ainsi de connaître les applications d'interface téléchargées.

L'invention se rapporte également à une carte d'abonné apte à être insérée dans un terminal et contenant au moins une application, ladite carte étant apte à échanger des informations d'initialisation avec le terminal via une première interface de communication et via un premier module d'émission réception de données, caractérisée en ce qu'elle comprend :
- un deuxième module d'émission réception de données apte à envoyer, via une deuxième interface de communication, une requête d'une information de configuration du terminal et apte à recevoir, via la deuxième interface de communication, une réponse à la requête comportant une information de configuration dudit terminal;
- des moyens de détermination aptes à déterminer, pour au moins une application de la carte d'abonné, en fonction de l'information de configuration reçue, la présence ou l'absence dans le terminal d'une application d'interface associée à ladite au moins une application;
et en ce que le premier module d'émission réception de données est apte à envoyer, via la première interface de télécommunication, au moins une commande de téléchargement de ladite application d'interface en cas d'absence.

L'invention se rapporte également à un terminal apte à être connecté à une carte d'abonné contenant au moins une application, ledit terminal étant apte à échanger des informations d'initialisation avec la carte d'abonné via une première interface de communication et via un premier module de communication de données, caractérisé en ce qu'il comprend :
- un module de communication sans contact comprenant un premier module d'émission réception de données, apte à recevoir, via une deuxième interface de communication, une requête d'une information de configuration du terminal et à envoyer, via la deuxième interface de communication, une réponse à la requête comportant une information de configuration dudit terminal;
ledit premier module de communication de données étant apte à recevoir, via une première interface de télécommunication, au moins une commande de téléchargement d'une application d'interface associée à une application de la carte d'abonné;
- des moyens de transmission de ladite au moins une commande à un serveur distant;
- des moyens de mise à jour de l'information de configuration, suite au téléchargement de l'application d'interface commandée.

L'invention se rapporte également à un système comportant un terminal et une carte d'abonné.

L'invention se rapporte encore à un produit programme d'ordinateur comprenant des instructions pour mettre en oeuvre les étapes d'un procédé de demande de configuration tel que décrit précédemment lorsqu'il est chargé et exécuté par un processeur.

L'invention se rapporte enfin à un produit programme d'ordinateur comprenant des instructions pour mettre en oeuvre les étapes d'un procédé de configuration tel que décrit précédemment lorsqu'il est chargé et exécuté par un processeur.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant le contexte général de l'invention,
- la figure 2 est un organigramme illustrant les différentes étapes d'un procédé de demande de configuration et d'un procédé de configuration selon l'invention,
- la figure 3 est un schéma-bloc illustrant un système apte à réaliser les étapes d'un procédé de demande de configuration et d'un procédé de configuration selon un mode de réalisation de l'invention,
- la figure 4 est un schéma illustrant un exemple de registre apte à contenir des informations de configuration selon l'invention.

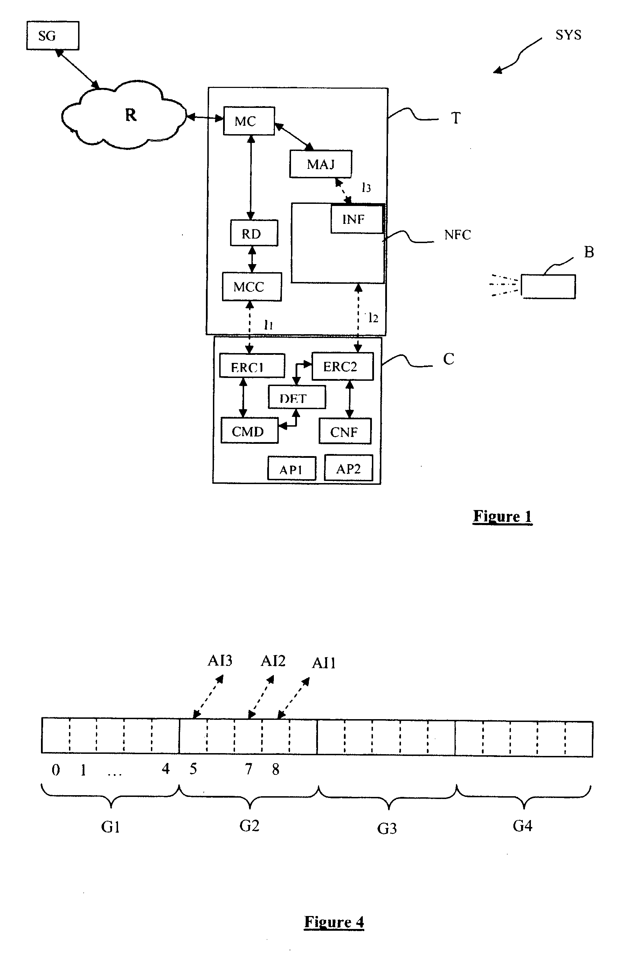

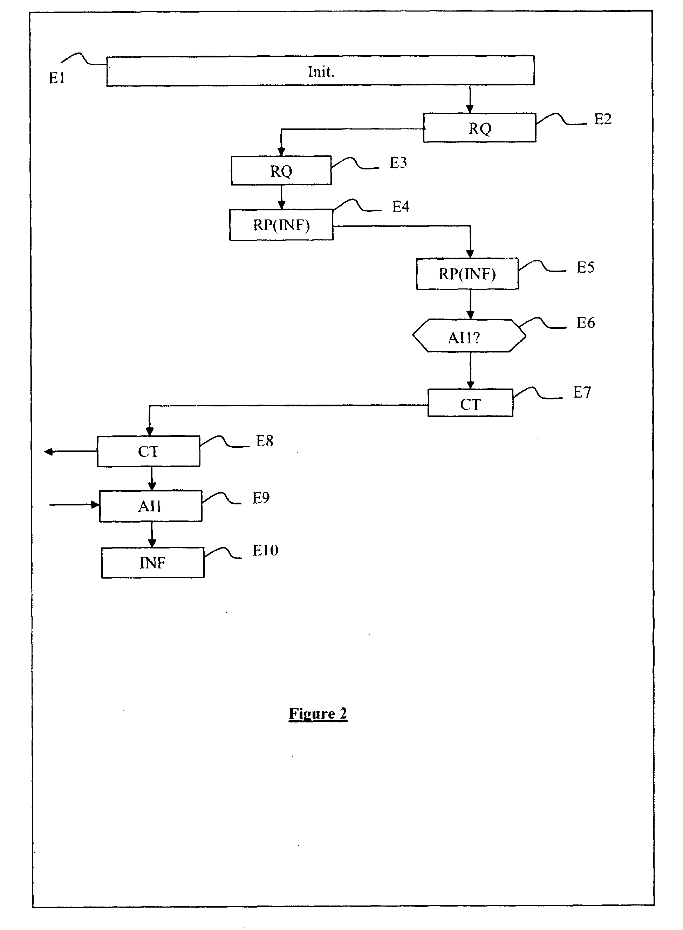

Un mode de réalisation d'un procédé de demande de configuration et d'un procédé de configuration va maintenant être décrit en référence aux figures 1 et 2.

En référence à la figure 1, un système SYS comprend un terminal T et une carte d'abonné C apte à être insérée dans le terminal T.

Le terminal T est, par exemple, un téléphone mobile ou un PDA (pour "Personal Digital Assistant").

Le terminal T comporte un premier module de communication MCC apte à communiquer avec la carte d'abonné C, via une première interface de communication I1.

Le terminal T possède également un deuxième module de communication MC, par exemple un module GSM, permettant une communication, via un réseau de communication R, avec des serveurs distants, par exemple avec un serveur de gestion SG. Cette communication est par exemple une communication "OTA" (pour "Over The Air"), c'est-à-dire une communication sans fil classique. A titre d'alternative, le terminal T est relié au réseau R par une ligne téléphonique filaire.

Le terminal T comporte également un module de communication sans contact NFC. Le module de communication sans contact NFC est apte à communiquer via une liaison sans contact avec un équipement distant, par exemple une borne B située à proximité du terminal T. Le module sans contact NFC est également apte à dialoguer avec la carte d'abonné C, via une deuxième interface de communication I2.

Le terminal T comporte également un module RD de redirection et un module MAJ de mise à jour d'une information de configuration.

La carte d'abonné C est par exemple un support amovible de type SIM ou UICC (pour "Universal Integrated Circuit Card") ou une carte à mémoire hébergeant un élément sécurisé (SD card, Embeded Secure controler ...).

Une ou plusieurs applications (AP1, AP2...) ont été enregistrées sur la carte d'abonné C. Ces applications peuvent être des applications dites "sans contact".

La carte d'abonné C comporte un premier module d'émission réception ERC1 apte à dialoguer avec le terminal T via la première interface de communication I1, un deuxième module d'émission réception ERC2 apte à communiquer avec le terminal T via la deuxième interface de communication I2, un module CNF de configuration, un module CMD de commande et un module DET de détermination.

En référence à la figure 2, les différentes étapes d'un procédé de demande de configuration et d'un procédé de configuration selon un mode de réalisation de l'invention vont maintenant être décrites.

Lors d'une première étape E1 de démarrage du terminal, suite à la demande de l'utilisateur ou à l'introduction d'une nouvelle carte d'abonné dans le terminal, le terminal T initialise un échange de données d'initialisation INIT avec la carte d'abonné C, via la première interface de communication I1.

Suite à cet échange de données, lors d'une étape E2, le module de configuration CNF de la carte d'abonné C transmet au module sans contact NFC du terminal T, via le deuxième module d'émission réception ERC2 et la deuxième interface de communication 12, une requête RQ d'informations de configuration.

La requête RQ est reçue par le module sans contact NFC, lors d'une étape E3.

L'étape E3 est suivie d'une étape E4 lors de laquelle le module sans contact NFC lit, dans une mémoire M du terminal T ou du module sans contact NFC du terminal T, une information de configuration INF et transmet, via la deuxième interface de communication I2, une réponse RP contenant l'information de configuration INF.

Le deuxième module d'émission réception ERC2 de la carte d'abonné C reçoit la réponse RP contenant l'information de configuration INF, lors d'une étape E5 et la transmet au module de détermination DET de la carte d'abonné C.

L'étape E5 est suivie d'une étape E6 lors de laquelle le module de détermination DET de la carte d'abonné C détermine, pour une ou plusieurs applications de la carte d'abonné C, la présence ou l'absence dans le terminal T d'une application d'interface associée à chaque application, en fonction de l'information de configuration INF reçue. Par exemple, le module DET de détermination détermine si une application d'interface AI1 associée à l'application AP1 est présente ou non dans le terminal T.

Si la ou les applications d'interface associées sont présentes, le processus s'arrête. La carte d'abonmé C se positionne en attente d'une commande du terminal T ou du module sans contact NFC.

Si la ou les applications d'interface associées ne sont pas présentes dans le terminal T, le module de commande CMD de la carte d'abonné C, lors d'une étape E7, transmet au terminal T, via le premier module d'émission réception de données ERC1 de la carte d'abonné et via la première interface de télécommunication I1, au moins une commande de téléchargement CT de la ou des applications d'interface associées. Par exemple, la commande CT est une commande de téléchargement de l'application d'interface AI1 associée à l'application AP1.

Le module de redirection RD du terminal T reçoit, lors d'une étape E8, la commande de téléchargement CT, via la première interface de communication et le premier module MCC de communication et la retransmet au serveur de gestion SG via le deuxième module de communication MC du terminal T.

L'étape E8 est suivie d'une étape E9 lors de laquelle la ou les applications d'interface commandées sont reçues par le terminal T via le deuxième module de communication MC et le réseau R et sont enregistrées dans une mémoire du terminal T. Par exemple, l'application d'interface AI1 est reçue par le terminal T.

Puis, lors d'une étape E10, l'information de configuration INF est mise à jour dans la mémoire M par le module MAJ de mise à jour du terminal T indiquant ainsi la présence de la ou des applications d'interface reçues dans le terminal T. Le module MAJ de mise à jour est apte à accéder à la mémoire M, via une troisième interface de communication I3.

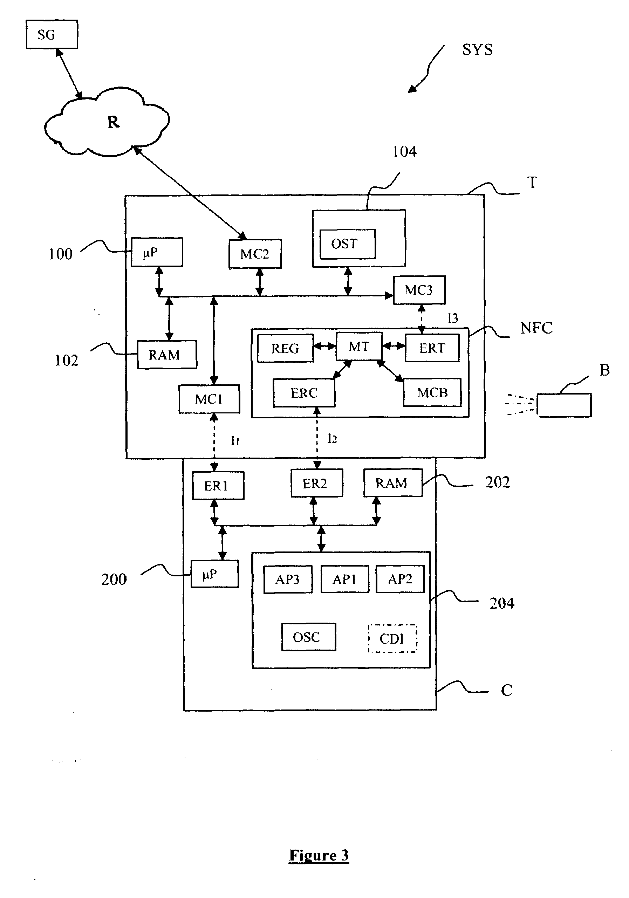

Un mode de réalisation particulier dans lequel la carte d'abonné contient une application de gestion des applications va maintenant être décrit en référence aux figures 3 et 4.

En référence à la figure 3, le terminal T du système SYS possède notamment une unité de traitement 100 équipée d'un microprocesseur, une mémoire vive de type RAM 102, une ou plusieurs mémoires mortes de type ROM ou EEPROM 104 dans laquelle sont enregistrés des programmes pouvant être exécutés par le microprocesseur. Parmi ces programmes, figurent un programme principal OST (appelé OS-Terminal pour "operating system").

Le terminal T peut comporter de manière classique et non exhaustive les éléments suivants: un clavier, un écran, un microphone, un haut-parleur, un moyen de stockage...

Le terminal T comporte un premier module de communication MC1 pour l'émission et la réception de données avec une carte d'abonné, via une première interface de communication I1. La première interface de communication I1 est par exemple une interface conforme à la norme ISO 7816.

Le terminal T comporte également un deuxième module de communication MC2, par exemple un module GSM, permettant une communication, via un réseau de communication R, avec des serveurs distants, par exemple avec un serveur de gestion SG.

Le terminal T possède également un troisième module de communication MC3 apte à communiquer avec un module de communication sans contact NFC, via une troisième interface de communication I3.

Le terminal T comporte également un module de communication sans contact NFC. Le module de communication sans contact NFC comprend un module de communication MCB pour communiquer, via une liaison sans contact, avec un équipement distant, par exemple une borne B située à proximité du terminal T.

Le module sans contact NFC comprend également un premier module d'émission réception de données ERC pour l'émission et la réception de données avec la carte d'abonné C, via une deuxième interface de communication I2. La deuxième interface de communication I2 est par exemple une interface SWP (pour "Single Wire Protocol") définie dans la norme ETSI TS 102.613 release 7 et utilise par exemple le protocole HCI (pour "Host Controller Interface") défini dans la norme ETSI TS 102.622 release 7.

Le module sans contact NFC comprend également un deuxième module d'émission réception de données ERT apte à communiquer avec le terminal T via la troisième interface de communication I3.

Le module sans contact NFC du terminal T comporte un registre REG, qui est par exemple une mémoire de type EEPROM.

A titre d'alternative, le registre REG est une zone mémoire du terminal T accessible au moins en lecture par le module sans contact NFC du terminal T.

Le registre REG est initialisé lors d'une étape préalable, par exemple lors de la fabrication du terminal T.

Le module sans contact NFC comprend également un module de traitement MT équipé d'un microprocesseur.

La carte d'abonné C est par exemple une carte d'abonné de type UICC.

Egalement en référence à la figure 3, la carte d'abonné C comprend notamment un microprocesseur 200, un premier module d'émission-réception ER1, un deuxième module d'émission-réception ER2, une ou plusieurs mémoires 202 de type RAM et une ou plusieurs mémoires 204 de type ROM ou EEPROM dans laquelle sont enregistrés des programmes pouvant être exécutés par le microprocesseur 200. Parmi ces programmes, figurent un programme principal OSC (appelé OS-carte pour "operating system"), une application CDI de gestion des applications de la carte d'abonné et une ou plusieurs applications (AP1, AP2, ...) de fournisseurs de service.

Le premier module d'émission-réception ER1 de la carte d'abonné C est apte à recevoir et à transmettre des données du ou vers le terminal T, via la première interface de communication I1

Le deuxième module d'émission-réception ER2 de la carte d'abonné C est apte à recevoir et à transmettre des données du ou vers le module sans contact NFC du terminal T, via la deuxième interface de communication I2.

On rappelle que l'interface ISO 7816 et l'interface SWP utilisent des contacts physiques d'une carte d'abonné différents pour la transmission des données.

Lors de la première étape E1, le terminal T échange des données d'initialisation INIT avec la carte d'abonné C, via la première interface de communication I1, le premier module MC1 de communication du terminal T et le premier module d'émission réception ER1 de la carte d'abonné C. Cet échange de données permet par exemple de déterminer la vitesse de dialogue entre le terminal et la carte d'abonné et/ou de transmettre des informations de profil du terminal. Lors de cet échange, le terminal transmet par exemple un évènement appelé "event command after ATR" (décrit dans la norme ETSI TS 102.241 release 6, chapître 6.2). Cet évènement déclenche le lancement de l'application de gestion CDI de la carte d'abonné C.

A titre d'alternative, le lancement de l'application de gestion CDI peut être effectué sur réception d'un autre évènement ou commande transmis par le terminal T lors de l'échange de données d'initialisation INIT.

Lors de l'étape E2 suivante, l'application de gestion CDI de la carte d'abonné C transmet au module sans contact NFC du terminal T, via le deuxième module ER2 d'émission réception de données de la carte d'abonné C et la deuxième interface de communication I2, une requête RQ1 d'informations de configuration. La requête RQ1 est par exemple une commande HCI "any get parameter" comportant en paramètre un index de la registre REG. La commande HCI "any get parameter" est définie dans la norme ETSI TS 102.622 release 7 chapitre 8.2.

Par exemple, la mémoire REG contient un nombre prédéterminé de bits, chaque bit est attribué à un opérateur déterminé et l'index du registre REG contenu dans la commande RQ1 est une position (ou offset) dans le registre REG du bit réservé à l'opérateur gérant la carte d'abonné C.

La requête RQ1 est reçue par le premier module ERC d'émission réception de données du module sans contact NFC lors de l'étape E3 et transmise au module de traitement MT du module sans contact NFC.

Si le terminal T ne possède pas de module sans contact, il ne reçoit pas la requête et le processus s'arrête.

Si le module sans contact NFC n'implémente pas la deuxième interface de communication I2, c'est-à-dire si le module sans contact NFC ne comprend pas les commandes HCI dans l'exemple de réalisation, le processus s'arrête.

Sinon, l'étape E3 est suivie de l'étape E4 lors de laquelle le module de traitement MT du module sans contact NFC lit en mémoire le registre REG et transmet, via le premier module ERC d'émission réception de données du module sans contact NFC et la deuxième interface de communication I2, la valeur contenue à l'index reçu dans le registre REG. La valeur contenue à l'index reçu dans le registre REG représente une information de configuration INF.

Par exemple, l'index contient un bit positionné à 1 ou à 0 indiquant si une application d'interface CPI associée à l'application de gestion CDI des applications de la carte d'abonné C est présente ou non dans le terminal T.

Lors de l'étape E5, la carte d'abonné C reçoit l'information de configuration INF.

L'étape E5 est suivie d'une étape E6 lors de laquelle la carte d'abonné C détermine, en fonction de l'information de configuration INF reçue, si une application d'interface CPI associée à l'application de gestion CDI des applications de la carte d'abonné C est présente ou non dans le terminal T.

Si l'information de configuration INF reçue atteint une valeur prédéterminée par exemple 1, l'application d'interface CPI associée à l'application de gestion CDI est présente. L'information de présence de l'application d'interface CPI indique à l'application de gestion CDI et donc à la carte d'abonné C que le terminal T est correctement configuré pour fonctionner avec la carte d'abonné C insérée. Dans ce cas, le processus s'arrête et la carte d'abonné C se positionne, par exemple, en attente d'une commande du terminal T ou du module sans contact NFC.

Si l'information de configuration INF reçue n'atteint pas la valeur prédéterminée, l'application d'interface CPI n'est pas présente dans le terminal T. Dans ce cas, l'application de gestion CDI transmet, lors de l'étape E7, au terminal T, via le premier module ER1 d'émission réception de données et la première interface de télécommunication I1, une commande CT de téléchargement de l'application d'interface CPI associée à l'application CDI de gestion.

La commande CT est par exemple un SMS (pour "Short Message Service") contenant le numéro du serveur SG, par exemple une commande "Send Short Message" définie dans la norme ETSI TS 102.223 release 4 chapitre 6.4.

A titre d'alternative, la commande CT est une demande de connexion HTTP (pour "HyperText transfert Protocol") à l'adresse IP du serveur SG. La demande de connexion est par exemple une commande "launch brower" définie dans la norme ETSI TS 102.223 release 4 chapître 6.4.

La commande CT contient également une information d'identification du terminal T, par exemple le numéro IMEI (pour "International Mobile Equipment Identity") du terminal T. Le numéro IMEI du terminal T est par exemple obtenu par la carte d'abonné C en réponse à une commande "Provide-Local-Information" transmise par la carte d'abonné C au terminal T via la première interface de communication I1. La commande "Provide-Locat-Information" est définie dans la norme ETSI TS 102.223.

Le terminal T reçoit, lors de l'étape E8, la commande de téléchargement CT et la retransmet au serveur de gestion SG via le deuxième module de communication MC2 du terminal T et le réseau R.

A titre d'alternative, la commande CT reçue lors de l'étape E8 ne contient pas d'information d'identification du terminal T et cette information est ajoutée par le terminal T avant envoi de la commande CT au serveur de gestion SG.

L'étape E8 est suivie d'une étape E9 lors de laquelle l'application d'interface CPI associée à l'application CDI de gestion est reçue par le terminal T via le deuxième module de communication MC2 et est enregistrée dans une mémoire du terminal T.

Puis, lors de l'étape E10, Le terminal T commande la mise à jour de l'information de configuration INF dans le registre REG. Par exemple, la mise à jour consiste à positionner à une valeur prédéterminée, par exemple à 1, le bit attribué à l'opérateur gérant la carte d'abonné C, indiquant ainsi la présence de l'application d'interface CPI dans le terminal T.

Cette mise à jour est par exemple effectuée par l'envoi par le terminal T, via le troisième module MC3 de communication du terminal T et via la troisième interface de communication I3, d'une commande HCI "any set parameter" définie dans la norme ETSI TS 102.622 release 7 chapître 8.2. La commande transmise est reçue par le deuxième module d'émission réception ERT du module sans contact NFC et transmise au module de traitement MT qui met à jour le registre REG.

Suite à son installation, l'application d'interface CPI est lancée de façon classique et l'application d'interface CPI détermine les autres applications d'interface à télécharger et en commande leur téléchargement. Par exemple, l'application d'interface CPI associée à l'application de gestion CDI des applications de la carte d'abonné C interroge l'application CDI de gestion, via la première interface de communication I1, pour obtenir la liste des applications installées dans la carte d'abonné C. Suite à la réception de cette information, l'application d'interface CPI détermine quelles sont les applications d'interface associées aux applications de la carte d'abonné et non installées dans le terminal T. Puis l'application d'interface CPI commande, auprès du serveur SG, le téléchargement de ces applications.

Un deuxième mode de réalisation va maintenant être décrit

Dans ce mode de réalisation, un programme principal OSC (appelé OS-carte pour "operating system") et trois applications AP1, AP2 et AP3 de fournisseurs de service ont été installées sur le carte d'abonné C.

Par exemple, l'application AP1 est une application de transport, l'application AP2 est une application de paiement et l'application AP3 est une application de fidélité.

Une application d'interface AI1 est associée à l'application AP1, une application d'interface AI2 est associée à l'application AP2 et une application d'interface AI3 est associée à l'application AP3.

Le registre REG du module sans contact NFC a été initialisé lors d'une phase préalable de configuration du terminal T, par exemple lors de la fabrication.

Lors de la première étape E1 de démarrage, le terminal T initialise un échange de données d'initialisation INIT avec la carte d'abonné C.

Lors de l'étape E2 suivante, le programme principal OSC de la carte d'abonné C transmet au module sans contact NFC du terminal T, via la deuxième interface de communication I2, une requête RQ2 d'informations de configuration. La requête RQ2 est par exemple une commande HCI "any get parameter" comportant en paramètre un index du registre REG du module de communication sans contact NFC.

Dans ce mode de réalisation, le registre REG contient un nombre prédéterminé de bits formant un ou plusieurs groupes, chaque groupe étant attribué à un opérateur prédéterminé. De plus, chaque bit est associé à une application d'interface.

Un exemple de registre REG est illustré en figure 4. Dans cet exemple, le registre REG contient 4 groupes G1, G2, G3 et G4 de 5 bits. Le groupe G2 est attribué à l'opérateur gérant la carte d'abonné C. Le bit 5, qui est un bit du groupe G2, est associé à l'application d'interface AI3 associée à l'application AP3, le bit 7 est associé à l'application d'interface AI2 associée à l'application AP2 et le bit 8 est associé à l'application d'interface AI1 associée à l'application AP1.

Dans l'exemple de réalisation décrit, l'index du registre REG contenu dans la commande est une adresse permettant au module sans contact NFC d'atteindre le groupe G2 du registre REG, le groupe G2 étant ici le groupe réservé pour l'opérateur gérant la carte d'abonné C. A titre d'alternative, l'index est une position (ou offset) par rapport à l'adresse de début du registre REG, par exemple l'offset correspondant au groupe G2.

La requête RQ2 est reçue par le module sans contact NFC lors de l'étape E3.

Lors de l'étape E4, le module sans contact NFC lit en mémoire le registre REG, et transmet via la deuxième interface de communication I2 à la carte d'abonné C, le contenu du registre REG pour le groupe G2, c'est-à-dire les 5 bits du groupe G2. Ces 5 bits représentent une information de configuration INF.

Si on suppose que seule l'application d'interface AI2 associée à l'application AP2 est installée dans le terminal T, l'information de configuration transmise est "00100".

Lors de l'étape E5 suivante, la carte d'abonné C reçoit l'information de configuration INF.

Lors de l'étape E6 suivante, le programme principal OSC de la carte d'abonné C détermine, en fonction de l'information de configuration reçue, que l'application d'interface AI2 associée à l'application AP2 de la carte d'abonné est présente dans le terminal T et que les applications d'interface AI1 et AI3 associées respectivement aux applications AP 1 et AP3 de la carte d'abonné C sont absentes dans le terminal T.

Lors de l'étape E7, le programme OSC de la carte d'abonné C commande la transmission au terminal T, via le premier module ER1 d'émission-réception de données et la première interface de télécommunication I1, une commande CT1 de téléchargement de l'application d'interface AI1 et une commande CT2 de téléchargement de l'application d'interface AI3.

Le terminal T reçoit lors de l'étape E8 les commandes de téléchargement CT1 et CT2 et les retransmet au serveur de gestion SG via le deuxième module de communication MC2.

L'étape E8 est suivie de l'étape E9 lors de laquelle les applications d'interface AI1 et AI3 associées aux applications AP1 et AP3 sont reçues par le terminal T via le deuxième module de communication MC2 du terminal T puis enregistrées dans une mémoire du terminal T, par exemple une mémoire 104 de type EEPROM.

Puis, lors de l'étape E10, le terminal T met à jour le registre REG. Pour cela, il envoie au module sans contact NFC, via la troisième interface I3, une commande HCI "set parameter" avec en paramètre la valeur 10110 et la valeur de l'index.

Si, par la suite, le terminal T procède au téléchargement d'une nouvelle application d'interface, suite, par exemple à une demande de l'utilisateur du terminal T, suite au téléchargement de cette nouvelle application d'interface, le terminal T met à jour le registre REG du module de communication sans contact NFC.

Les deux modes de réalisation décrits sont donnés à titre d'exemple et peuvent être combinés.

Par exemple, le registre REG peut contenir une première partie dans laquelle un bit est affecté par opérateur et une seconde partie indiquant les applications d'interface installées. La carte d'abonné C peut ainsi commander le téléchargement d'une application d'interface CPI associée à une application CDI de gestion des applications de la carte d'abonné puis le téléchargement d'applications d'interface associées aux applications des fournisseurs de service présentes dans la carte d'abonné.

Dans une variante de réalisation, suite à l'étape E1 d'initialisation, la carte d'abonné C envoie au terminal T, via la première interface de communication I1, une commande d'obtention d'un numéro d'identification du terminal T, par exemple le numéro IMEI. Le numéro d'identification reçu est comparé à un numéro d'identification enregistré dans la carte d'abonné. Si les numéros d'identification sont identiques, le terminal T correspond au terminal utilisé lors de l'utilisation précédente de la carte d'abonné et les étapes E2 à E10 ne sont pas mises en oeuvre. En revanche, si le numéro d'identification reçu est différent du numéro d'identification enregistré, le numéro d'identification enregistré est remplacé en mémoire par le numéro d'identification reçu et les étapes E2 à E10 sont mises en oeuvre. Cette variante permet de limiter la mise en oeuvre des procédés de demande de configuration et de configuration au cas où un changement de terminal est détecté par la carte d'abonné.

## Revendications

1. Procédé de demande de configuration d'un terminal (T) connecté à une carte d'abonné (C), ladite carte contenant au moins une application **caractérisé en ce que**, suite à une étape d'échanges d'information d'initialisation, via une première interface de communication (I1), entre ledit terminal et ladite carte d'abonné, il comporte :
- une étape d'envoi (E2), via une deuxième interface de communication (12), d'une requête (RQ) d'une information de configuration (INF) du terminal;
- une étape de réception (E5), via la deuxième interface de communication (I2), d'une réponse (RP) à la requête (RQ) comportant une information de configuration dudit terminal;
- pour au moins une application de la carte d'abonné, une étape de détermination (E6), en fonction de l'information de configuration reçue, de la présence ou de l'absence dans le terminal d'une application d'interface associée à ladite au moins une application;
- une étape d'envoi (E7), via la première interface de télécommunication, d'au moins une commande (CT) de téléchargement de ladite application d'interface en cas d'absence.

2. Procédé de demande de configuration selon la revendication 1 **caractérisé en ce que** l'application d'interface est apte à gérer l'ensemble des applications d'interface présentes dans le terminal.

3. Procédé de demande de configuration selon la revendication 1 **caractérisé en ce que** la requête comporte une adresse d'un registre d'un module de communication sans contact du terminal et **en ce que** la réponse contient au moins une partie du contenu dudit registre.

4. Procédé de demande de configuration selon la revendication 3 **caractérisé en ce que** le registre contient une information de présence ou d'absence d'au moins une application d'interface.

5. Procédé de configuration d'un terminal (T) connecté à une carte d'abonné (C), ladite carte contenant au moins une application, **caractérisé en ce que**, suite à une étape d'échanges d'information d'initialisation, via une première interface de communication (I1), entre ledit terminal et ladite carte d'abonné, il comporte :
- une étape de réception (E3), via une deuxième interface de communication (I2), d'une requête (RQ) d'une information (INF) de configuration du terminal;
- une étape d'envoi (E4), via la deuxième interface de communication (I2), d'une réponse (RP) à la requête comportant une information de configuration dudit terminal;
et, si au moins une application d'interface associée à une application de la carte d'abonné n'est pas présente dans ledit terminal :
- une étape de réception (E8), via la première interface de télécommunication (I1), d'au moins une commande (CT) de téléchargement d'une application d'interface associée à ladite application de la carte d'abonné;
- une étape de transmission (E8) de ladite au moins une commande à un serveur distant; et
- une étape de mise à jour (E10) de l'information de configuration, suite au téléchargement de l'application d'interface commandée.

6. Procédé de configuration selon la revendication 5 **caractérisé en ce que** l'information de configuration est contenue dans un registre (REG) d'un module de communication sans contact du terminal mobile.

7. Procédé de configuration selon la revendication 5 **caractérisé en ce que** la requête comporte une adresse d'un registre d'un module de communication sans contact du terminal et **en ce que** la réponse contient au moins une partie du contenu dudit registre.

8. Procédé de configuration selon la revendication 5 **caractérisé en ce que** l'application d'interface est apte à gérer l'ensemble des applications d'interface présentes dans le terminal.

9. Procédé de configuration selon la revendication 5 **caractérisé en ce que** l'étape de mise à jour (E10) de l'information de configuration comprend l'envoi d'une commande à un module de communication sans contact du terminal, via une troisième interface de communication (I3).

10. Procédé de configuration selon la revendication 5 **caractérisé en ce que** l'étape de mise à jour de l'information de configuration est réitérée lors d'un téléchargement par le terminal d'une nouvelle application d'interface.

11. Carte d'abonné (C) apte à être insérée dans un terminal (T) et contenant au moins une application, ladite carte étant apte à échanger des informations d'initialisation avec le terminal via une première interface de communication (I1) et via un premier module (ER1) d'émission réception de données, **caractérisée en ce qu'**elle comprend :
- un deuxième module (ER2) d'émission réception de données apte à envoyer, via une deuxième interface de communication (I2), une requête (RQ) d'une information de configuration du terminal et apte à recevoir, via la deuxième interface de communication, une réponse à la requête (RP) comportant une information de configuration (INF) dudit terminal;
- des moyens de détermination (DET) aptes à déterminer, pour au moins une application de la carte d'abonné, en fonction de l'information de configuration reçue, la présence ou l'absence dans le terminal d'une application d'interface associée à ladite au moins une application;
et **en ce que** le premier module (ER1) d'émission réception de données est apte à envoyer, via la première interface de télécommunication (I1), au moins une commande de téléchargement (CT) de ladite application d'interface en cas d'absence.

12. Terminal (T) apte à être connecté à une carte d'abonné (C) contenant au moins une application, ledit terminal étant apte à échanger des informations d'initialisation avec la carte d'abonné via une première interface de communication (I1) et via un premier module (MC1) de communication de données, **caractérisé en ce qu'**il comprend :
- un module de communication sans contact NFC comprenant un premier module (ERC) d'émission réception de données, apte à recevoir, via une deuxième interface de communication (I2), une requête (RQ) d'une information de configuration du terminal et à envoyer, via la deuxième interface de communication (I2), une réponse (RP) à la requête comportant une information (INF) de configuration dudit terminal; ledit premier module (MC1) de communication du terminal étant apte à recevoir, via une première interface de télécommunication (I1), au moins une commande (CT) de téléchargement d'une application d'interface associée à une application de la carte d'abonné;
- des moyens de transmission (RD) de ladite au moins une commande (CT) à un serveur distant (SG);
- des moyens (MAJ) de mise à jour de l'information de configuration, suite au téléchargement de l'application d'interface commandée.

13. Système (SYS) comportant un terminal (T) selon la revendication 12 et une carte d'abonné (C) selon la revendication 11.

14. Produit programme d'ordinateur comprenant des instructions pour mettre en oeuvre les étapes d'un procédé de demande de configuration selon l'une des revendications 1 à 4 lorsqu'il est chargé et exécuté par un processeur.

15. Produit programme d'ordinateur comprenant des instructions pour mettre en oeuvre les étapes d'un procédé de configuration selon l'une des revendications 5 à 10 lorsqu'il est chargé et exécuté par un processeur.

## Patentansprüche

1. Konfigurationsanforderungsverfahren eines mit einer Teilnehmerkarte (C) verbundenen Endgeräts (T), wobei die Karte mindestens eine Anwendung enthält, **dadurch gekennzeichnet, dass** es nach einem Schritt des Austauschs von Initialisierungsinformationen über eine erste Kommunikationsschnittstelle (I1) zwischen dem Endgerät und der Teilnehmerkarte aufweist:
- einen Schritt (E2) des Sendens, über eine zweite Kommunikationsschnittstelle (12), einer Abfrage (RQ) einer Konfigurationsinformation (INF) des Endgeräts;
- einen Schritt (E5) des Empfangs, über die zweite Kommunikationsschnittstelle (12), einer Antwort (RP) auf die Abfrage (RQ), die eine Konfigurationsinformation des Endgeräts enthält;
- für mindestens eine Anwendung der Teilnehmerkarte, einen Schritt der Feststellung (E6), abhängig von der empfangenen Konfigurationsinformation, des Vorhandenseins oder des Nichtvorhandenseins einer der mindestens einen Anwendung zugeordneten Schnittstellenanwendung im Endgerät;
- einen Schritt (E7) des Sendens, über die erste Telekommunikationsschnittstelle, mindestens eines Downloadbefehls (CT) der Schnittstellenanwendung im Fall des Nichtvorhandenseins.

2. Konfigurationsanforderungsverfahren nach Anspruch 1, **dadurch gekennzeichnet, dass** die Schnittstellenanwendung die Gesamtheit der im Endgerät vorhandenen Schnittstellenanwendungen verwalten kann.

3. Konfigurationsanforderungsverfahren nach Anspruch 1, **dadurch gekennzeichnet, dass** die Anforderung eine Adresse eines Registers eines kontaktlosen Kommunikationsmoduls des Endgeräts aufweist, und dass die Antwort mindestens einen Teil des Inhalts des Registers enthält.

4. Konfigurationsanforderungsverfahren nach Anspruch 3, **dadurch gekennzeichnet, dass** das Register eine Information des Vorhandenseins oder Nichtvorhandenseins mindestens einer Schnittstellenanwendung enthält.

5. Konfigurationsverfahren eines mit einer Teilnehmerkarte (C) verbundenen Endgeräts (T), wobei die Karte mindestens eine Anwendung enthält, **dadurch gekennzeichnet, dass** es nach einem Schritt des Austauschs von Initialisierungsinformationen über eine erste Kommunikationsschnittstelle (I1) zwischen dem Endgerät und der Teilnehmerkarte aufweist:
- einen Schritt (E3) des Empfangs, über eine zweite Kommunikationsschnittstelle (12), einer Abfrage (RQ) einer Konfigurationsinformation (INF) des Endgeräts;
- einen Schritt (E4) des Sendens, über die zweite Kommunikationsschnittstelle (12), einer Antwort (RP) auf die Abfrage, die eine Konfigurationsinformation des Endgeräts aufweist;
und, wenn mindestens eine einer Anwendung der Teilnehmerkarte zugeordnete Schnittstellenanwendung nicht im Endgerät vorhanden ist:
- einen Schritt (E8) des Empfangs, über die erste Telekommunikationsschnittstelle (I1), mindestens eines Downloadbefehls (CT) einer der Anwendung der Teilnehmerkarte zugeordneten Schnittstellenanwendung;
- einen Schritt (E8) der Übertragung des mindestens einen Befehls an einen fernen Server; und
- einen Schritt der Aktualisierung (E10) der Konfigurationsinformation nach dem Download der befohlenen Schnittstellenanwendung.

6. Konfigurationsverfahren nach Anspruch 5, **dadurch gekennzeichnet, dass** die Konfigurationsinformation in einem Register (REG) eines kontaktlosen Kommunikationsmoduls des mobilen Endgeräts enthalten ist.

7. Konfigurationsverfahren nach Anspruch 5, **dadurch gekennzeichnet, dass** die Abfrage eine Adresse eines Registers eines kontaktlosen Kommunikationsmoduls des Endgeräts aufweist, und dass die Antwort mindestens einen Teil des Inhalts des Registers enthält.

8. Konfigurationsverfahren nach Anspruch 5, **dadurch gekennzeichnet, dass** die Schnittstellenanwendung die Gesamtheit der im Endgerät vorhandenen Schnittstellenanwendungen verwalten kann.

9. Konfigurationsverfahren nach Anspruch 5, **dadurch gekennzeichnet, dass** der Schritt (E10) der Aktualisierung der Konfigurationsinformation das Senden eines Befehls an ein kontaktloses Kommunikationsmodul des Endgeräts über eine dritte Kommunikationsschnittstelle (13) enthält.

10. Konfigurationsverfahren nach Anspruch 5, **dadurch gekennzeichnet, dass** der Aktualisierungsschritt der Konfigurationsinformation bei einem Download einer neuen Schnittstellenanwendung durch das Endgerät wiederholt wird.

11. Teilnehmerkarte (C), die in ein Endgerät (T) eingeführt werden kann und mindestens eine Anwendung enthält, wobei die Karte über eine erste Kommunikationsschnittstelle (I1) und über ein erstes Daten-Sende-/Empfangsmodul (ER1) Initialisierungsinformationen mit dem Endgerät austauschen kann, **dadurch gekennzeichnet, dass** sie enthält:
- ein zweites Daten-Sende-/Empfangsmodul (ER2), das über eine zweite Kommunikationsschnittstelle (12) eine Abfrage (RQ) einer Konfigurationsinformation des Endgeräts senden und über die zweite Kommunikationsschnittstelle eine Antwort (RP) auf die Abfrage empfangen kann, die eine Konfigurationsinformation (INF) des Endgeräts aufweist;
- Feststellungseinrichtungen (DET), die für mindestens eine Anwendung der Teilnehmerkarte abhängig von der empfangenen Konfigurationsinformation das Vorhandensein oder Nichtvorhandensein einer der mindestens einen Anwendung zugeordneten Schnittstellenanwendung im Endgerät feststellen können;
und dass das erste Daten-Sende-/Empfangsmodul (ER1) über die erste Telekommunikationsschnittstelle (I1) mindestens einen Downloadbefehl (CT) der Schnittstellenanwendung im Fall des Nichtvorhandenseins senden kann.

12. Endgerät (T), das mit einer Teilnehmerkarte (C) verbunden werden kann, die mindestens eine Anwendung enthält, wobei das Endgerät mit der Teilnehmerkarte über eine erste Kommunikationsschnittstelle (I1) und über ein erstes Datenkommunikationsmodul (MC1) Initialisierungsinformationen austauschen kann, **dadurch gekennzeichnet, dass** es enthält:
- ein kontaktloses Kommunikationsmodul NFC, das ein erstes Daten-Sende-/Empfangsmodul (ERC) enthält, das über eine zweite Kommunikationsschnittstelle (12) eine Abfrage (RQ) einer Konfigurationsinformation des Endgeräts empfangen und über die zweite Kommunikationsschnittstelle (12) eine Antwort (RP) auf die Abfrage senden kann, die eine Konfigurationsinformation (INF) des Endgeräts aufweist; wobei das erste Kommunikationsmodul (MC1) des Endgeräts über eine erste Telekommunikationsschnittstelle (I1) mindestens einen Downloadbefehl (CT) einer einer Anwendung der Teilnehmerkarte zugeordneten Schnittstellenanwendung empfangen kann;
- Übertragungseinrichtungen (RD) des mindestens einen Befehls (CT) an einen fernen Server (SG);
- Einrichtungen (MAJ) zur Aktualisierung der Konfigurationsinformation nach dem Download der befohlenen Schnittstellenanwendung.

13. System (SYS), das ein Endgerät (T) nach Anspruch 12 und eine Teilnehmerkarte (C) nach Anspruch 11 aufweist.

14. Computerprogrammprodukt, das Anweisungen zur Durchführung der Schritte eines Konfigurationsanforderungsverfahrens nach einem der Ansprüche 1 bis 4 enthält, wenn es in einen Prozessor geladen und von ihm ausgeführt wird.

15. Computerprogrammprodukt, das Anweisungen zur Durchführung der Schritte eines Konfigurationsverfahrens nach einem der Ansprüche 5 bis 10 enthält, wenn es in einen Prozessor geladen und von ihm ausgeführt wird.

## Claims

1. Method for requesting the configuration of a terminal (T) connected to a subscriber card (C), said card containing at least one application **characterized in that**, following a step of exchanges of start-up information, via a first communications interface (I1), between said terminal and said subscriber card, it includes:
- a step (E2) of sending, via a second communications interface (12), of a request (RQ) for an item of configuration information (INF) from the terminal;
- a step (E5) of receiving, via the second communications interface (12), of a reply (RP) to the request (RQ) including an item of configuration information from said terminal;
- for at least one application of the subscriber card, a step (E6) of determination, as a function of the item of configuration information received, of the presence or absence in the terminal of an interface application associated with said at least one application;
- a step (E7) of sending, via the first telecommunications interface, of at least one command (CT) to download said interface application in the case of absence.

2. Configuration request method according to Claim 1, **characterized in that** the interface application is able to handle all the interface applications present in the terminal.

3. Configuration request method according to Claim 1, **characterized in that** the request includes an address of a register of a contactless communications module of the terminal and **in that** the reply contains at least a portion of the content of said register.

4. Configuration request method according to Claim 3, **characterized in that** the register contains an item of information about the presence or absence of at least one interface application.

5. Method for requesting the configuration of a terminal (T) connected to a subscriber card (C), said card containing at least one application, **characterized in that**, following a step of exchanges of start-up information, via a first communications interface (I1), between said terminal and said subscriber card, it includes:
- a step (E3) of receiving, via a second communications interface (12), of a request (RQ) for an item of configuration information (INF) from the terminal;
- a step (E4) of sending, via the second communications interface (12), of a reply (RP) to the request including an item of configuration information from said terminal;
and, if at least one interface application associated with an application of the subscriber card is not present in said terminal:
- a step (E8) of receiving, via the first telecommunications interface (I1), of at least one command (CT) to download an interface application associated with said application of the subscriber card;
- a step (E8) of transmission of said at least one command to a remote server; and
- a step (E10) of updating of the configuration information, following the downloading of the commanded interface application.

6. Configuration method according to Claim 5, **characterized in that** the item of configuration information is contained in a register (REG) of a contactless communications module of the mobile terminal.

7. Configuration method according to Claim 5, **characterized in that** the request includes an address of a register of a contactless communications module of the terminal and **in that** the reply contains at least a portion of the content of said register.

8. Configuration method according to Claim 5, **characterized in that** the interface application is able to handle all the interface applications present in the terminal.

9. Configuration method according to Claim 5, **characterized in that** the step (E10) of updating of the item of configuration information comprises the sending of a command to a contactless communications module of the terminal, via a third communications interface (I3).

10. Configuration method according to Claim 5, **characterized in that** the step of updating of the item of configuration information is repeated in the event of the terminal downloading a new interface application.

11. Subscriber card (C) able to be inserted into a terminal (T) and containing at least one application, said card being able to exchange start-up information with the terminal via a first communications interface (I1) and via a first data send/receive module (ER1), **characterized in that** it comprises:
- a second data send/receive module (ER2) able to send, via a second communications interface (12), a request (RQ) for an item of configuration information from the terminal and able to receive, via the second communications interface, a reply to the request (RP) including an item of configuration information (INF) from said terminal;
- determination means (DET) able to determine, for at least one application of the subscriber card, as a function of the item of configuration information received, the presence or absence in the terminal of an interface application associated with said at least one application;
and **in that** the first data send/receive module (ER1) is able to send, via the first telecommunications interface (I1), at least one command (CT) to download said interface application in the case of absence.

12. Terminal (T) able to be connected to a subscriber card (C) containing at least one application, said terminal being able to exchange start-up information with the subscriber card via a first communications interface (I1) and via a first data communication module (MC1), **characterized in that** it comprises:
- a contactless communications module NFC comprising a first data send/receive module (ERC), able to receive, via a second communications interface (12), a request (RQ) for an item of configuration information from the terminal and to send, via the second communications interface (12), a reply (RP) to the request including an item of configuration information (INF) from said terminal; said first communications module (MC1) of the terminal being able to receive, via a first telecommunications interface (I1), at least one command (CT) to download an interface application associated with an application of the subscriber card;
- means (RD) of transmission of said at least one command (CT) to a remote server (SG);
- means (MAJ) of updating of the item of configuration information, following the downloading of the commanded interface application.

13. System (SYS) including a terminal (T) according to Claim 12 and a subscriber card (C) according to Claim 11.

14. Computer program product comprising instructions for implementing the steps of a method for requesting configuration according to one of Claims 1 to 4 when it is loaded and executed by a processor.

15. Computer program product comprising instructions for the implementation of the steps of a configuration method according to one of Claims 5 to 10 when it is loaded and executed by a processor.
